# EUROPEAN PATENT SPECIFICATION

(11) **EP 4 575 093 B1**
(45) Date of publication and mention of the grant of the patent: **13.05.2026**
(21) Application number: 24207953.1
(22) Date of filing: 22.10.2024
(51) Int. Cl.: E01C 19/48

(54) **ROAD PAVING MACHINE AND HOPPER CONTROL SYSTEM FOR ROAD PAVING MACHINE**
STRASSENFERTIGER UND BUNKERSTEUERUNGSSYSTEM FÜR STRASSENFERTIGER
MACHINE DE PAVAGE DE ROUTE ET SYSTÈME DE COMMANDE DE TRÉMIE POUR MACHINE DE PAVAGE DE ROUTE

(30) Priority: 19.12.2023 JP 2023213673
(43) Date of publication of application: 25.06.2025
(73) Proprietor: Sumitomo (S.H.I.) Construction Machinery Co., Ltd., Shinagawa-ku Tokyo 141-6025 (JP)
(72) Inventor: MINO, Hisaho, Chiba, 263-0001 (JP)
(74) Representative: Louis Pöhlau Lohrentz

(56) References cited:
- EP-A1- 0 667 415
- JP-A- 2023 149 222
- "FULLY AUTOMATIC PAVER UNVEILED", INTERNATIONAL CONSTRUCTION, KHL GROUP, BETHESDA, MD, US, vol. 35, no. 11, 1 November 1996 (1996-11-01), pages 68, XP000639969, ISSN: 0020-6415

## Description

### BACKGROUND OF THE INVENTION

### Field of the Invention

The present disclosure relates to a road paving machine and a hopper control system for a road paving machine.

### Description of Related Art

In the related art, a road paving machine including a hopper, which is used to receive a pavement material to be transported by a dump truck, is known (refer to PTL 1). The road paving machine is adapted to receive the pavement material from a loading platform of a dump truck, which is dumped up, into the hopper, which is in a fully open state, in a state where rear wheels of the dump truck and a push roller provided at a front end of the road paving machine are in contact with each other (a coupled state or a docked state). The hopper is adapted to be opened and closed in response to an operation of an operator.

PTL 2 discloses an asphalt finisher that includes a hopper for pavement material, a conveyor, a screw, a screed, and a controller configured to estimate a volume of the pavement material discharged from the hopper.

### Citation List

### Patent Literature

[PTL 1] International Publication No. 2017/010541
[PTL 2] Japanese Unexamined Patent Publication No. 2023-149222

### SUMMARY OF THE INVENTION

However, in the above-described configuration, a driver of the dump truck cannot bring the rear wheels of the dump truck into contact with the push roller in a case where the operator of the road paving machine forgets to bring the hopper into the fully open state. The reason for this is that there is a concern that the loading platform of the dump truck comes into contact with the hopper wing. For this reason, the operation of the hopper to be performed by the operator of the road paving machine is an important operation that should not be forgotten for smooth supply of the pavement material. Further, there is a concern that such an operation of the hopper which should not be forgotten may be work having a burden on the operator of the road paving machine.

Therefore, it is desired to provide a road paving machine that can reduce a burden on an operator related to an operation of a hopper.

A road paving machine according to an embodiment of the present disclosure includes a tractor, a hopper that is installed in front of the tractor and receives a pavement material from a vehicle transporting the pavement material, a conveyor that feeds the pavement material present in the hopper to a rear of the tractor, a screw that spreads the pavement material fed by the conveyor in the rear of the tractor, a screed that levels the pavement material spread by the screw in a rear of the screw, an object detection device that detects an object around the road paving machine, and a control device that controls opening and closing of the hopper based on a positional relationship between the vehicle detected by the object detection device and the road paving machine. The control device starts a control to automatically close the hopper in different stages between an open stage and a fully closed stage in a case where the pavement material is completely supplied to the road paving machine from the vehicle.

The above-described road paving machine can reduce a burden on an operator related to the operation of the hopper.

### BRIEF DESCRIPTION OF THE DRAWINGS

Fig. 1 is a side view of an asphalt finisher and a dump truck during construction.
Fig. 2 is a top view of the asphalt finisher and the dump truck during construction.
Fig. 3 is a block diagram showing a configuration example of a hopper control system.
Fig. 4 is a flowchart of an example of hopper opening processing.
Fig. 5 is a flowchart of an example of hopper closing processing.
Fig. 6 is a side view of the asphalt finisher and the dump truck during construction.
Fig. 7 is a top view of the asphalt finisher and the dump truck during construction.
Fig. 8 is a schematic diagram showing another configuration example of the hopper control system.

### DETAILED DESCRIPTION OF THE INVENTION

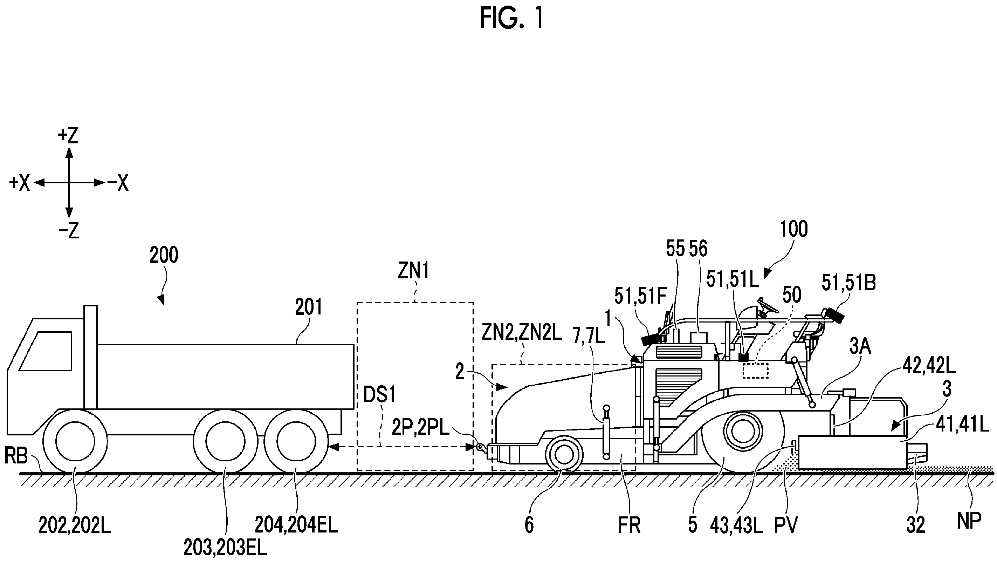

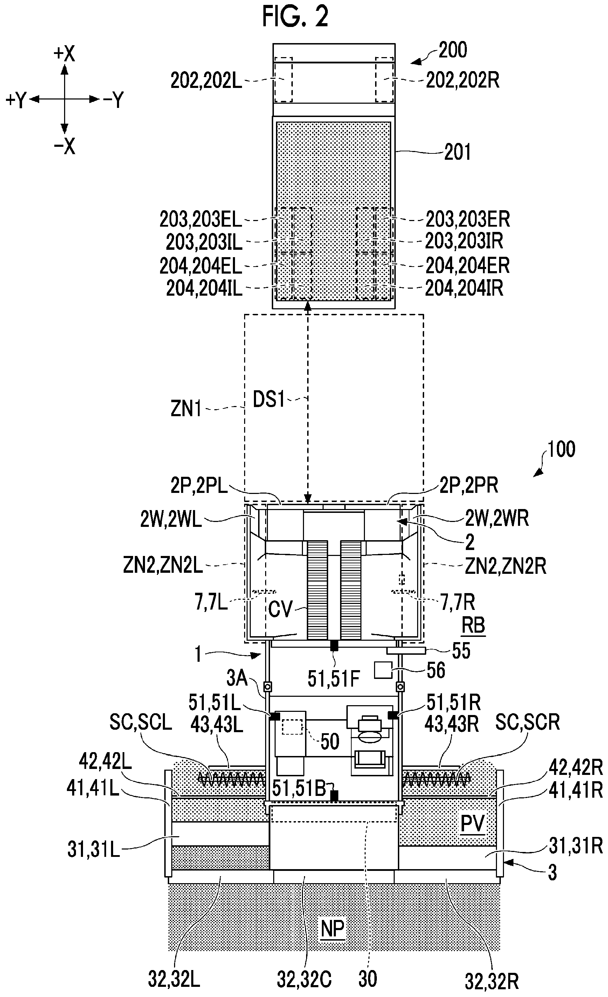

Fig. 1 is a side view of an asphalt finisher 100, which is an example of a road paving machine according to an embodiment of the present disclosure, and a dump truck 200. The road paving machine may be a base paver, a tack paver, a multi-asphalt paver, or the like. The dump truck 200 is an example of a transport vehicle for supplying (inputting) a pavement material PV into a hopper 2 of the asphalt finisher 100. Fig. 2 is a top view of the asphalt finisher 100 and the dump truck 200, and corresponds to Fig. 1. Specifically, Fig. 1 is a side view of the asphalt finisher 100 and the dump truck 200 during construction (during the laying of the pavement material PV), and Fig. 2 is a top view of the asphalt finisher 100 and the dump truck 200 during construction (during the laying of the pavement material PV).

The asphalt finisher 100 mainly includes a tractor 1, a hopper 2, and a screed 3. Hereinafter, for convenience, a direction of the hopper 2 viewed from the tractor 1 (+X direction) will be defined as a front, and a direction of the screed 3 viewed from the tractor 1 (-X direction) will be defined as a rear. Further, +Z direction is defined as a vertically upper side, and -Z direction is defined as a vertically lower side.

The tractor 1 is a mechanism for causing the asphalt finisher 100 to travel. In the shown example, the tractor 1 rotates a rear wheel 5 using a rear wheel traveling hydraulic motor and causes the asphalt finisher 100 to move by rotating a front wheel 6 using a front wheel traveling hydraulic motor. The rear wheel traveling hydraulic motor and the front wheel traveling hydraulic motor are driven by receiving hydraulic oil supplied from a hydraulic pump. The rear wheel 5 and the front wheel 6 may be replaced with a crawler.

A controller 50 is a control device that controls the asphalt finisher 100. In the shown example, the controller 50 is formed of a microcomputer including a CPU, a volatile storage device, a non-volatile storage device, and the like and is mounted on the tractor 1. Various types of functions of the controller 50 are realized as the CPU executes a program stored in the non-volatile storage medium.

The hopper 2 is a mechanism that is used to receive the pavement material PV. In the shown example, the hopper 2 is installed on a frame FR that forms a front lower portion of the tractor 1, and includes a hopper wing 2W. The hopper wing 2W is adapted to be capable of being opened and closed in a Y-axis direction (a width direction, a vehicle width direction) by a hopper cylinder 7. Specifically, the hopper wing 2W includes a left hopper wing 2WL that can be opened and closed to the left by a left hopper cylinder 7L, and a right hopper wing 2WR that can be opened and closed to the right by a right hopper cylinder 7R. The controller 50 can open the hopper wing 2W by causing the hopper cylinder 7 to contract, and can close the hopper wing 2W by causing the hopper cylinder 7 to extend.

The asphalt finisher 100 receives the pavement material PV from a loading platform 201 of the dump truck 200 with the hopper wing 2W being in a fully open state (most open state). In the shown example, the pavement material PV is an asphalt mixture and is also referred to as an "asphalt composite". In Figs. 1 and 2, the hopper wing 2W is in the fully open state. The pavement material PV received in the hopper 2 is not shown in Fig. 2 so that a part of a conveyor CV is seen. The pavement material PV received in the hopper 2 is fed to a rear of the tractor 1 by a conveyor CV provided in a middle of a bottom of the hopper **2.** In a case where the amount of the pavement material PV in the hopper 2 is reduced, the hopper wing 2W is closed and the pavement material PV present near the inner wall of the hopper 2 is collected in the middle of the bottom of the hopper 2. This is to allow the conveyor CV to feed the pavement material PV to the rear of the tractor 1. In addition, in a case where an operator of the asphalt finisher 100 forgets to close the hopper wing 2W, the pavement material PV to be supplied to the middle of the bottom is insufficient and the pavement material PV to be supplied to the rear of the tractor 1 is eventually insufficient. As a result, there is a concern that poor construction is caused. For this reason, the controller 50 may be adapted to automatically close the hopper 2 in a case where a predetermined hopper closing condition is satisfied.

The pavement material PV fed to the rear of the tractor 1 is spread in the vehicle width direction in the rear of the tractor 1 and in front of the screed 3 by a screw SC. In the shown example, the screw SC is in a state where a left extension screw SCL and a right extension screw SCR are connected to each other. Further, in Figs. 1 and 2, the pavement material PV spread by the screw SC is shown by a coarse dot pattern and a newly constructed pavement body NP leveled by the screed 3 is shown by a fine dot pattern.

A push roller 2P that is rotatable about an axis extending in the vehicle width direction is provided at a front end of the frame FR. The push roller 2P is adapted to be in contact with rear wheels (rear-rear wheels 204) of the dump truck 200 and to be rotatable together with the rear wheels (rear-rear wheels 204) of the dump truck 200. In the shown example, the push roller 2P includes a left push roller 2PL that is to be in contact with left rear wheels (a left outer rear-rear wheel 204EL and a left inner rear-rear wheel 204IL) of the dump truck 200 and a right push roller 2PR that is to be in contact with right rear wheels (a right outer rear-rear wheel 204ER and a right inner rear-rear wheel 204IR) of the dump truck 200.

In a case where the asphalt finisher 100 is moving forward at the time of contact (docking) between the push roller 2P and the rear wheels (rear-rear wheels 204) of the dump truck 200, the dump truck 200 stops in a neutral state without applying a brake at a location several centimeters in front of the asphalt finisher 100. After that, the asphalt finisher 100 moving forward brings the push roller 2P into contact with the rear wheels (rear-rear wheels 204) of the stopping dump truck 200, and moves forward together with the dump truck 200 while pushing the dump truck 200 forward. Further, in a case where the asphalt finisher 100 is stopped during the docking, the dump truck 200 may move rearward at a low speed until the rear wheels (rear-rear wheels 204) and the push roller 2P come into contact with each other.

The screed 3 is a mechanism for leveling the pavement material PV. In the shown example, the screed 3 includes a front screed 30 and a rear screed 31. The screed 3 is a floating screed pulled by the tractor 1 and is connected to the tractor 1 via a leveling arm 3A. The rear screed 31 includes a left rear screed 31L that is adapted to be capable of extending and contracting to the left and a right rear screed 31R that is adapted to be capable of extending and contracting to the right. In Figs. 1 and 2, the screed 3 is in a most extending (widening) state.

Side plates 41 are attached to distal ends of the rear screed 31. In the shown example, a left side plate 41L is attached to a left end of the left rear screed 31L, and a right side plate 41R is attached to a right end of the right rear screed 31R.

A footboard 32 is attached to a rear portion of the screed 3. Specifically, the footboard 32 is attached to the rear portion of the screed 3 such that a worker can move back and forth in the vehicle width direction without stepping on the newly constructed pavement body NP in the rear of the screed 3. In the shown example, the footboard 32 includes a central footboard 32C that is attached to the rear portion of the front screed 30, a left footboard 32L that is attached to the rear portion of the left rear screed 31L, and a right footboard 32R that is attached to the rear portion of the right rear screed 31R.

A moldboard 42 is disposed in front of the rear screed 31. In the shown example, the moldboard 42 is attached to the screed 3 and is adapted to be movable up and down to adjust the amount of the pavement material PV that stays in front of the rear screed 31. The pavement material PV reaches under the screed 3 through a gap between a lower end of the moldboard 42 and a roadbed RB.

Specifically, the moldboard 42 includes a left moldboard 42L that is disposed in front of the left rear screed 31L and a right moldboard 42R that is disposed in front of the right rear screed 31R.

The screw SC is disposed in front of the moldboard 42, and a retaining plate 43 is disposed in front of the screw SC. Specifically, the retaining plate 43 includes a left retaining plate 43L that is disposed in front of the left extension screw SCL and a right retaining plate 43R that is disposed in front of the right extension screw SCR. The retaining plate 43 may be omitted.

A space recognition device 51, a display device 55, and a sound output device 56 are attached to an upper portion of the tractor 1.

The space recognition device 51 is adapted to recognize a space around the asphalt finisher 100. The space recognition device 51 includes at least one of a monocular camera, a stereo camera, a LIDAR, an ultrasonic sensor, an infrared sensor, a laser radar, a millimeter wave radar, or the like. The space recognition device 51 may include a space recognition device not attached to the asphalt finisher 100, such as a space recognition device installed on the road, or may be a space recognition device not attached to the asphalt finisher 100. In this case, the space recognition device not attached to the asphalt finisher 100 may be connected to the controller 50 via wireless communication or wired communication. In the shown example, the space recognition device 51 is a monocular camera that can image the periphery of the asphalt finisher 100.

In the shown example, the space recognition device 51 includes a rear camera 51B that images a rear of the asphalt finisher 100, a front camera 51F that images a front of the asphalt finisher 100, a left camera 51L that images a left of the asphalt finisher 100, and a right camera 51R that images a right of the asphalt finisher 100.

The display device 55 is a display device attached to the tractor 1 so that a person in front of the asphalt finisher 100 can visually recognize the display device. In the shown example, the display device 55 is a liquid crystal display that can display texts, figures, and the like, and is attached to an upper right end portion of the tractor 1 so that a driver of the dump truck 200 with a steering wheel on the right side can directly visually recognize display device or visually recognize the display device through a side-view mirror or a rearview mirror. Specifically, the display device 55 is attached to protrude to the right from the vehicle width of the tractor 1.

The sound output device 56 is adapted to be capable of outputting sound to a person in front of the asphalt finisher 100. In the shown example, the sound output device 56 is a speaker that can output voice, and is attached to the upper right end portion of the tractor 1 so that the driver of the dump truck 200 with a steering wheel on the right side can easily hear the voice.

The dump truck 200 includes the loading platform 201 on which the pavement material PV is to be loaded. In the shown example, the dump truck 200 is a 10-wheel dump truck of which rear wheels are double tires, and includes front wheels 202, rear-front wheels 203, and rear-rear wheels 204. The rear-front wheels 203 and the rear-rear wheels 204 form the rear wheels of the dump truck 200. In the shown example, as shown in Fig. 2, the front wheels 202 include a left front wheel 202L and a right front wheel 202R, the rear-front wheels 203 include a left outer rear-front wheel 203EL, a left inner rear-front wheel 203IL, a right outer rear-front wheel 203ER, and a right inner rear-front wheel 203IR, and the rear-rear wheels 204 include a left outer rear-rear wheel 204EL, a left inner rear-rear wheel 204IL, a right outer rear-rear wheel 204ER, and a right inner rear-rear wheel 204IR.

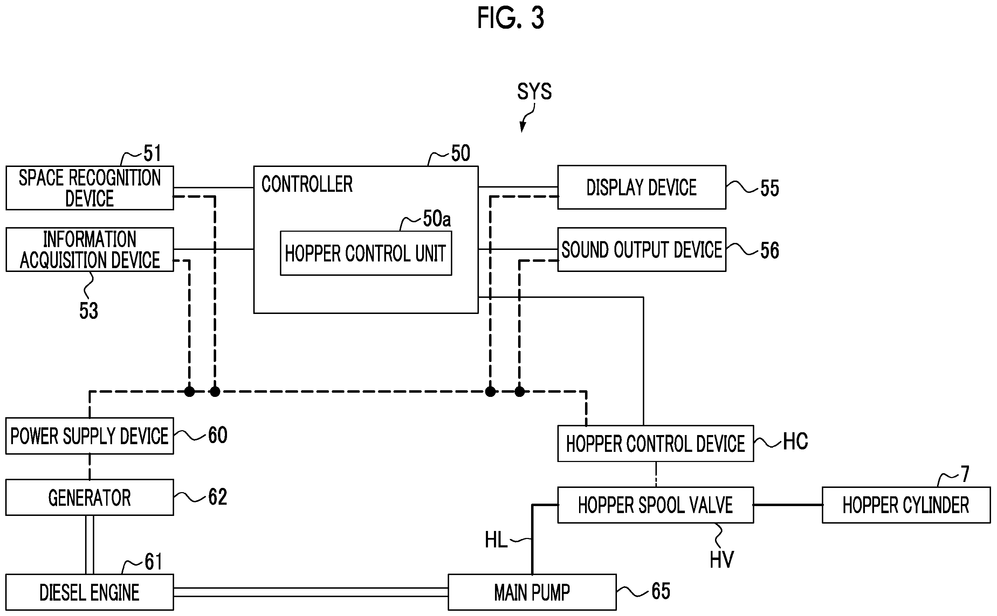

Next, a hopper control system SYS that supports construction performed by the asphalt finisher 100 will be described with reference to Fig. 3. Fig. 3 is a block diagram showing a configuration example of the hopper control system SYS. The hopper control system SYS mainly includes the controller 50, the space recognition device 51, an information acquisition device 53, the display device 55, the sound output device 56, and a hopper control device HC. In the shown example, the controller 50, the space recognition device 51, the information acquisition device 53, the display device 55, the sound output device 56, and the hopper control device HC is supplied with power from a power supply device 60.

The power supply device 60 converts AC power, which is generated by a generator 62 driven by a diesel engine 61 as an example of a drive source, into DC power. The power supply device 60 may be is supplied with power from a battery (not shown).

The diesel engine 61 is adapted such that a rotary shaft thereof is connected to a rotary shaft of a main pump 65 and can drive the main pump 65.

The main pump 65 is adapted to be capable of supplying hydraulic oil to a hydraulic actuator including the hopper cylinder 7. In the shown example, the main pump 65 is a variable capacity hydraulic pump that can discharge hydraulic oil for causing the hopper cylinder 7 to extend and contract.

A thick dot line shown in Fig. 3 represents a power line, a thin solid line represents a signal line, a thick solid line represents a first oil passage HL through which the hydraulic oil flows, and a double line represents that the diesel engine 61, the generator 62, and the main pump 65 are mechanically connected to each other.

The diesel engine 61 may be replaced with other internal combustion engines such as a hydrogen engine. Further, the drive source may be replaced with a combination of an all-solid-state battery or a lithium-ion battery and an electric motor.

The controller 50 includes a hopper control unit 50a as a functional element. The hopper control unit 50a is formed of software, hardware, firmware, or a combination thereof, and controls the display device 55, the sound output device 56, and the hopper control device HC.

In the shown example, the hopper control unit 50a determines whether or not an opening/closing operation for the hopper wing 2W is necessary based on an output of at least one of the space recognition device 51 or the information acquisition device 53. Then, in a case where the hopper control unit 50a determines that the opening/closing operation is necessary, the hopper control unit 50a outputs a command relating to the start of the opening/closing operation to the hopper control device HC. The hopper control device HC is adapted to be capable of opening and closing the hopper wing 2W in response to the command output from the hopper control unit 50a.

Specifically, the hopper control device HC is a solenoid valve that is adapted to be capable of adjusting pilot pressure of a hopper spool valve HV. The hopper spool valve HV is a control valve provided in the first oil passage HL connecting the main pump 65 and the hopper cylinder 7. The solenoid valve serving as the hopper control device HC can control the extension and contraction of the hopper cylinder 7 by being opened and closed to adjust pilot pressure acting on a pilot port of the hopper spool valve HV in response to a command output from the controller 50. The pilot port of the hopper spool valve HV includes a closing-side pilot port and an opening-side pilot port. However, the pilot port of the hopper spool valve HV may include only the closing-side pilot port. Further, the hopper control device HC may be a hopper spool valve HV as a solenoid valve.

The information acquisition device 53 is adapted to be capable of acquiring information and outputting the acquired information to the controller 50. The information acquisition device 53 includes at least one of, for example, a communication device, a positioning device, a traveling speed sensor, a steering angle sensor, a pavement thickness sensor, a pavement width sensor, or the like. The communication device controls communication with an external device such as a communication device mounted on the dump truck 200. The traveling speed sensor detects a traveling speed of the asphalt finisher 100. The steering angle sensor detects a steering angle of the asphalt finisher 100. The pavement thickness sensor detects a height of the roadbed RB and a height of the newly constructed pavement body NP to calculate a pavement thickness. The pavement width sensor detects an extension length of the rear screed 31 to calculate a pavement width. The information acquisition device 53 may be an input device such as a touch panel or a switch.

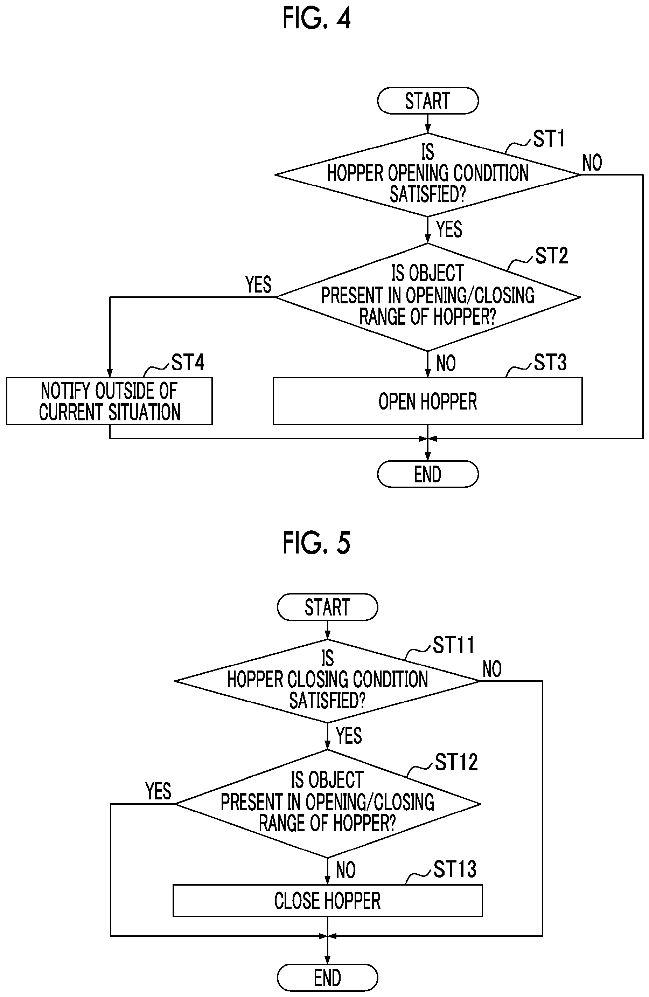

Next, an example of processing in which the hopper control unit 50a controls the hopper control device HC to open and close the hopper 2 (hereinafter, referred to as "hopper opening/closing processing") will be described with reference to Fig. 4. Fig. 4 is a flowchart of an example of processing in which the hopper control unit 50a controls the hopper control device HC to open the hopper 2 (hereinafter, referred to as "hopper opening processing"). The hopper opening processing is an example of the hopper opening/closing processing. In the example shown in Fig. 4, the hopper control unit 50a repeatedly executes the hopper opening processing at a predetermined control cycle during the operation of the asphalt finisher 100. For example, the hopper control unit 50a starts to execute the hopper opening processing in a case where the power supply device 60 is supplied with power or in a case where the operation of the diesel engine 61 is started. The hopper control unit 50a may be adapted to start to execute the hopper opening processing in a case where a predetermined operation using an input device or the like, such as the operation of a switch, is performed. Further, the hopper control unit 50a may be adapted to stop executing the hopper opening processing in a case where a predetermined operation using an input device or the like, such as the operation of a switch, is performed.

First, the hopper control unit 50a determines whether or not a hopper opening condition is satisfied (Step ST1). In the shown example, the hopper control unit 50a determines that the hopper opening condition is satisfied in a case where at least one of the space recognition device 51 or the information acquisition device 53 acquires information on the approach of the dump truck 200 to the asphalt finisher 100. The hopper opening condition may include a condition in which the hopper 2 is not in the fully open state as one of hopper opening conditions.

For example, the hopper control unit 50a determines that information on the approach of the dump truck 200 to the asphalt finisher 100 is acquired and the hopper opening condition is satisfied in a case where the hopper control unit 50a detects that the dump truck 200 has entered a first range ZN1, which is a predetermined range in front of the asphalt finisher 100, based on an image acquired by the front camera 51F as the space recognition device 51. That is, the space recognition device 51 may be adapted to function as an object detection device.

Alternatively, the hopper control unit 50a may determine that information on the approach of the dump truck 200 to the asphalt finisher 100 is acquired and the hopper opening condition is satisfied in a case where the hopper control unit 50a detects that a distance DS1 between the asphalt finisher 100 and the dump truck 200 is shorter than a predetermined first distance based on an output of the ultrasonic sensor as the space recognition device 51. In this case, the distance DS1 is, for example, a distance between the ultrasonic sensor attached to a front end portion of the frame FR and the rear-rear wheel 204 of the dump truck 200. The ultrasonic sensor is disposed such that the position of the ultrasonic sensor in a traveling direction of the asphalt finisher 100 is the same as the position of the push roller 2P. That is, the distance DS1 is a distance between the push roller 2P and the rear-rear wheel 204.

Alternatively, the hopper control unit 50a may determine that the hopper opening condition is satisfied in a case where the hopper control unit 50a detects that the dump truck 200 has entered the first range ZN1 based on the information received by the communication device as the information acquisition device 53. For example, the information received by the communication device as the information acquisition device 53 includes an output of a positioning device such as a GNSS receiver mounted on the dump truck 200. In this case, the hopper control unit 50a can detect that the dump truck 200 has entered the first range ZN1 based on an output of a positioning device as the information acquisition device 53 mounted on the asphalt finisher 100 and an output of a positioning device mounted on the dump truck 200. In this case, the controller 50 may be adapted to be capable of calculating a distance between the asphalt finisher 100 and the dump truck 200 and determining that the hopper opening condition is satisfied in a case where the calculated distance is shorter than the predetermined first distance.

In a case where the hopper control unit 50a determines that the hopper opening condition is not satisfied (NO in Step ST1), the hopper control unit 50a ends the current hopper opening processing without opening the hopper 2.

On the other hand, in a case where the hopper control unit 50a determines that the hopper opening condition is satisfied (YES in Step ST1), the hopper control unit 50a determines whether or not an object is present in an opening/closing range of the hopper 2 (Step ST2). In the shown example, the hopper control unit 50a determines whether or not an object is present in a second range ZN2, which is an example of the opening/closing range of the hopper 2, based on the image acquired by the front camera 51F as the space recognition device 51. The opening/closing range of the hopper 2 is, for example, a preset spatial range, which includes a space between the hopper wing 2W in a fully closed state (most closed state) and the hopper wing 2W in the fully open state. Specifically, the second range ZN2 includes a second left range ZN2L which is an example of an opening/closing range of the left hopper wing 2WL, and a second right range ZN2R which is an example of an opening/closing range of the right hopper wing 2WR.

Then, in a case where the hopper control unit 50a determines that an object is not present in the opening/closing range of the hopper 2 (NO in Step ST2), the hopper control unit 50a operates the hopper control device HC to open the hopper 2 (Step ST3). In the shown example, the hopper control unit 50a outputs a current command to the solenoid valve serving as the hopper control device HC. The solenoid valve serving as the hopper control device HC that has received the current command adjusts pilot pressure acting on the opening-side pilot port of the hopper spool valve HV by adjusting a flow channel area of an oil passage through which pilot oil flows, and brings the hopper 2 into the fully open state by operating the hopper spool valve HV such that the hopper cylinder 7 contracts (such that hydraulic oil flows out of a bottom-side oil chamber of the hopper cylinder 7). The hopper control unit 50a may output a command to at least one of the display device 55 or the sound output device 56 after the hopper 2 is brought into the fully open state. In this case, the display device 55 that has received the command may display text information such as "CAN REVERSE" or "DOCK PLEASE" or an image that conveys the meaning of the text information to prompt the driver of the dump truck 200 to reverse the dump truck 200. Alternatively, the sound output device 56 that has received the command may output an alarm or output voice information such as "CAN REVERSE" or "DOCK PLEASE" to prompt the driver of the dump truck 200 to reverse the dump truck 200.

On the other hand, in a case where the hopper control unit 50a determines that an object is present in the opening/closing range of the hopper 2 (YES in Step ST2), the hopper control unit 50a notifies the outside of a current situation (Step ST4). In the shown example, the hopper control unit 50a determines that the hopper wing 2W cannot be opened since an object is present in the second range ZN2. Then, the hopper control unit 50a determines that there is a concern that the loading platform 201 of the dump truck 200 and the hopper wing 2W, which is not in the fully open state, come into contact with each other in a case where the dump truck 200 continues to move rearward, and outputs a command to at least one of the display device 55 or the sound output device 56. The display device 55 that has received the command displays, for example, text information such as "NO REVERSE" or "STOP PLEASE" or an image that conveys the meaning of the text information to prompt the driver of the dump truck 200 to stop the dump truck 200. Alternatively, the sound output device 56 that has received the command outputs an alarm or outputs voice information such as "NO REVERSE" or "STOP PLEASE" to prompt the driver of the dump truck 200 to stop the dump truck 200. This is to prevent the loading platform 201 of the dump truck 200 and the hopper wing 2W, which is not in the fully open state, from coming into contact with each other. The hopper control unit 50a may be adapted to prompt the driver of the dump truck 200 to move forward the dump truck 200 as necessary.

In this way, in a case where the hopper control unit 50a determines that an object is present in the opening/closing range of the hopper 2, the hopper control unit 50a ends the current hopper opening processing without operating the hopper control device HC, that is, without automatically opening the hopper 2. This is to avoid contact between the hopper 2 and an object.

The controller 50 may be adapted to be capable of distinguishing the dump truck 200 from an object other than the dump truck 200 by performing various types of image processing on the image acquired by the front camera 51F. The image processing includes, for example, image recognition processing such as deep learning. In this case, in a case where the hopper control unit 50a determines that an object other than the dump truck 200 is present in the first range ZN1, the hopper control unit 50a may end the current hopper opening processing without automatically opening the hopper 2. This configuration has an effect of being capable of suppressing that the hopper 2 is automatically opened in response to an object other than the dump truck 200.

Further, the controller 50 may be adapted to be capable of distinguishing a person and an object other than a person by performing various types of image processing on the image acquired by the space recognition device 51. Furthermore, a worker may wear an armband or a helmet on which a predetermined marker is drawn. This is to make it easy for a worker to be recognized in the image recognition processing. That is, this is to allow the controller 50 to find out an image of a predetermined marker to detect the position of the worker. In this case, in a case where the hopper control unit 50a determines that a person is present in the first range ZN1 or the second range ZN2, the hopper control unit 50a may execute the same processing as processing to be executed in a case where the hopper control unit 50a determines that an object other than a person is present or may execute processing different from processing to be executed in a case where the hopper control unit 50a determines that an object other than a person is present. The processing different from processing to be executed in a case where the hopper control unit 50a determines that an object other than a person is present is, for example, an emergency stop of the dump truck 200, an emergency stop of the asphalt finisher 100, or the like. This is to reliably prevent contact between a person and the dump truck 200 or the asphalt finisher 100. In this case, the asphalt finisher 100 may be adapted to be capable of urgently stopping the dump truck 200.

The controller 50 may be adapted to be capable of detecting an object such as the dump truck 200 or a person present around the asphalt finisher 100 based on an output of another object detection device (space recognition device) such as a stereo camera, a millimeter wave radar, an ultrasonic sensor, a laser radar, an infrared sensor, or a LIDAR, or may be adapted to be capable of calculating a distance between the detected object and the asphalt finisher 100.

Further, Step ST2 that is a process for determining whether or not an object is present in the opening/closing range of the hopper 2 may be omitted, or may be integrated with Step ST1 that is a process for determining whether or not the hopper opening condition is satisfied. In this case, the hopper control unit 50a can open the hopper 2 in a case where the hopper control unit 50a determines that the hopper opening condition is satisfied.

Furthermore, the controller 50 may be adapted to calculate a degree of reliability (a value indicating the certainty of a recognition result) of a recognition result that an object approaching the asphalt finisher 100 is the dump truck 200, based on the output of at least one of the space recognition device 51 or the information acquisition device 53. In addition, the controller 50 may be adapted to automatically open the hopper 2 in a case where the degree of reliability is equal to or higher than a first threshold. Further, the controller 50 may be adapted to automatically open the hopper 2 and then to output sound or to display an image to inform the operator of the asphalt finisher 100 that the object approaching the asphalt finisher 100 may not be the dump truck 200, in a case where the degree of reliability is equal to or higher than a second threshold and lower than the first threshold. This configuration has an effect of being capable of suppressing that the pavement material PV in the hopper 2 is unnecessarily cooled since the hopper 2 is left in the fully open state even though the pavement material PV is not supplied from the dump truck 200. Alternatively, the controller 50 may be adapted not to automatically open the hopper 2 and to inform an operator that an object approaching the asphalt finisher 100 may not be the dump truck 200 or that an object other than the dump truck 200 is approaching the asphalt finisher 100, in a case where the degree of reliability is lower than the second threshold. This configuration has an effect of being capable of suppressing that the pavement material PV in the hopper 2 is unnecessarily cooled since the hopper 2 is in the fully open state even though the pavement material PV is not supplied from the dump truck 200. Furthermore, in this case, the controller 50 may cause the sound output device 56 to output an alarm. This is to call the attention of the object approaching the asphalt finisher 100.

In addition, the controller 50 may be adapted to be capable of determining whether the object other than the dump truck 200 is a moving object such as a person or an animal or a stationary object. Then, the controller 50 may be adapted to issue an alarm toward the moving object in a case where the controller 50 determines that the object other than the dump truck 200 is a moving object. This configuration has an effect of being capable of making the moving object that is not aware of the presence of the asphalt finisher 100 aware of the presence of the asphalt finisher 100, and prompting the moving object to retreat from a predetermined range in front of the asphalt finisher 100. Further, the controller 50 may be adapted to issue an alarm to the operator of the asphalt finisher 100 in a case where the controller 50 determines that the object other than the dump truck 200 is a stationary object, and may urgently stop the asphalt finisher 100 as necessary. This is to prevent contact between the asphalt finisher 100 and the stationary object. Furthermore, this processing can also be used in a case where the controller 50 determines that the object other than the dump truck 200 is a moving object.

With such hopper opening processing, the controller 50 can automatically bring the hopper 2 into the fully open state before the dump truck 200 and the asphalt finisher 100 come into contact with each other even though the operator of the asphalt finisher 100 does not manually perform an operation for opening the hopper 2. For this reason, the controller 50 can suppress the occurrence of contact between the loading platform 201 of the dump truck 200 and the hopper wing 2W.

Next, another example of the hopper opening/closing processing will be described with reference to Figs. 5 to 7. Fig. 5 is a flowchart of an example of processing in which the hopper control unit 50a controls the hopper control device HC to close the hopper 2 (hereinafter, referred to as "hopper closing processing"). The hopper closing processing is an example of the hopper opening/closing processing. In the example shown in Fig. 5, the hopper control unit 50a repeatedly executes the hopper closing processing at a predetermined control cycle during the operation of the asphalt finisher 100. For example, the hopper control unit 50a starts to execute the hopper closing processing in a case where the hopper 2 is in the fully open state. The hopper control unit 50a may be adapted to start to execute the hopper closing processing in a case where a predetermined operation using an input device or the like, such as the operation of a switch, is performed. Further, the hopper control unit 50a may be adapted to stop executing the hopper closing processing in a case where a predetermined operation using an input device or the like, such as the operation of a switch, is performed.

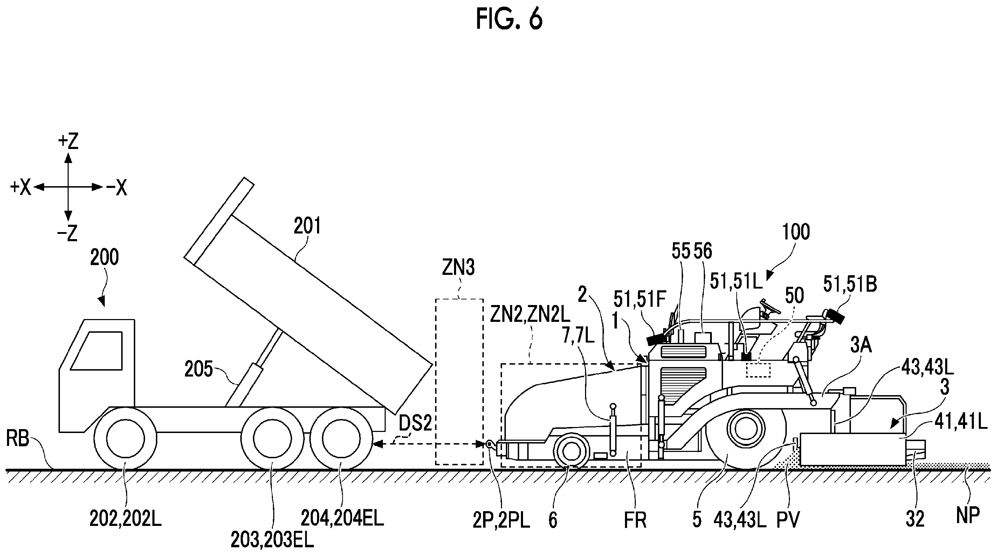

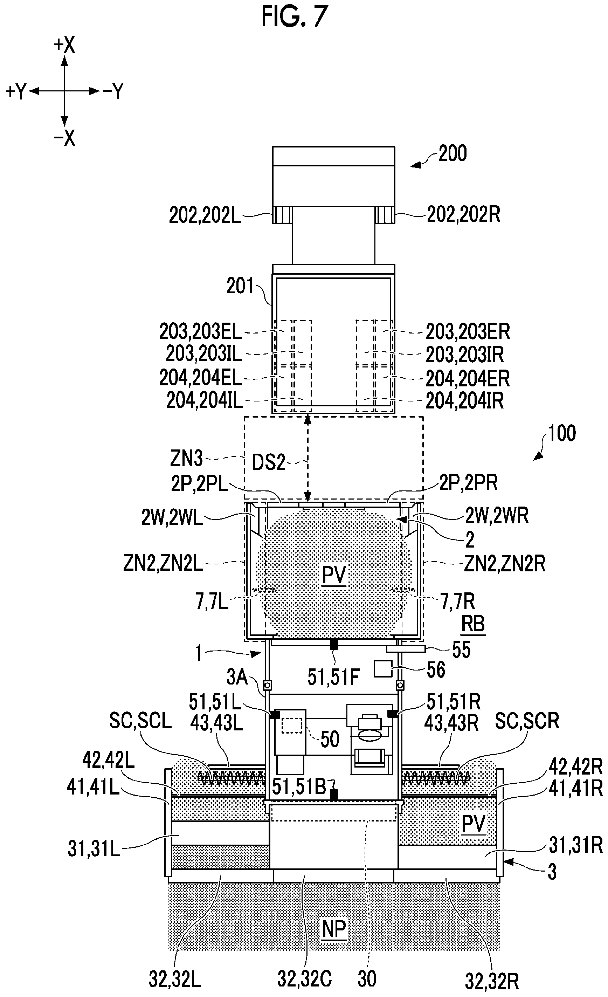

Fig. 6 is a side view of the asphalt finisher 100 and the dump truck 200 in a case where the hopper closing processing is being executed. Fig. 7 is a top view of the asphalt finisher 100 and the dump truck 200 in a case where the hopper closing processing is being executed, and corresponds to Fig. 6. In Figs. 6 and 7, the loading platform 201 of the dump truck 200 is lifted by a hoist cylinder 205 and the pavement material PV loaded on the loading platform 201 is supplied into the hopper 2. In addition, a state where the loading platform 201 is lifted by the hoist cylinder 205 is also referred to as a state where the loading platform 201 is dumped up. The dump truck 200 maintains the state where the loading platform 201 is dumped up until all the pavement material PV loaded on the loading platform 201 is supplied into the hopper 2. Then, in a case where all the pavement material PV loaded on the loading platform 201 is supplied into the hopper 2, the dump truck 200 starts to move forward and moves away from the asphalt finisher 100.

The hopper closing processing to be described with reference to Figs. 6 and 7 is different from the above-described hopper opening processing, which is executed in a case where the hopper 2 is not in the fully open state, in that the hopper closing processing is executed in a case where the hopper 2 is in the fully open state, for example, in a case where the dump truck 200 supplies the pavement material PV from the loading platform 201 into the hopper 2 of the asphalt finisher 100.

Even in this hopper closing processing, the hopper control unit 50a first determines whether or not the hopper closing condition is satisfied (Step ST11). In the shown example, the hopper control unit 50a determines that the hopper closing condition is satisfied in a case where at least one of the space recognition device 51 or the information acquisition device 53 acquires information on the separation of the dump truck 200 from the asphalt finisher 100. Specifically, the hopper control unit 50a determines that information on the separation of the dump truck 200 from the asphalt finisher 100 is acquired and the hopper closing condition is satisfied in a case where the hopper control unit 50a detects that the dump truck 200 has exited from a third range ZN3, which is a predetermined range in front of the asphalt finisher 100, based on the image acquired by the front camera 51F as the space recognition device 51. The third range ZN3 is typically a range smaller than the first range ZN1 shown in Figs. 1 and 2, but may be the same range as the first range ZN1 or may be a range larger than the first range ZN1.

Alternatively, the hopper control unit 50a may determine that information on the separation of the dump truck 200 from the asphalt finisher 100 is acquired and the hopper closing condition is satisfied in a case where the hopper control unit 50a detects that a distance DS2 between the asphalt finisher 100 and the dump truck 200 exceeds a predetermined second distance based on an output of the ultrasonic sensor as the space recognition device 51. In this case, the distance DS2 is, for example, a distance between the ultrasonic sensor attached to the front end portion of the frame FR and the rear-rear wheel 204 of the dump truck 200. The ultrasonic sensor is disposed such that the position of the ultrasonic sensor in the traveling direction of the asphalt finisher 100 is the same as the position of the push roller 2P. That is, the distance DS2 is a distance between the push roller 2P and the rear-rear wheel 204. The predetermined second distance is typically shorter than the predetermined first distance related to the distance DS1 shown in Figs. 1 and 2, but may be the same as the predetermined first distance or may be longer than the predetermined first distance.

Alternatively, the hopper control unit 50a may determine that the hopper closing condition is satisfied in a case where a predetermined hopper closing switch is operated by the operator of the asphalt finisher 100.

The hopper closing condition may include a condition in which the hopper 2 is not in the fully closed state as one of hopper closing conditions.

In a case where the hopper control unit 50a determines that the hopper closing condition is satisfied (YES in Step ST11), the hopper control unit 50a determines whether or not an object is present in the opening/closing range of the hopper 2 (Step ST12). In the shown example, the hopper control unit 50a determines whether or not an object is present in the second range ZN2 based on the image acquired by the front camera 51F as the space recognition device 51.

Then, in a case where the hopper control unit 50a determines that an object is not present in the opening/closing range of the hopper 2 (NO in Step ST12), the hopper control unit 50a operates the hopper control device HC to close the hopper 2 (Step ST13). In the shown example, the hopper control unit 50a outputs a current command to the solenoid valve serving as the hopper control device HC. The solenoid valve serving as the hopper control device HC that has received the current command adjusts pilot pressure acting on the closing-side pilot port of the hopper spool valve HV by adjusting the flow channel area of the oil passage through which pilot oil flows, and brings the hopper 2 into the fully closed state by operating the hopper spool valve HV such that the hopper cylinder 7 extends (such that hydraulic oil flows into the bottom-side oil chamber of the hopper cylinder 7).

On the other hand, in a case where the hopper control unit 50a determines that an object is present in the opening/closing range of the hopper 2 (YES in Step ST12), the hopper control unit 50a ends the current hopper closing processing without operating the hopper control device HC, that is, without automatically closing the hopper 2. This is to reliably prevent contact between the hopper wing 2W and the object. Further, the hopper control unit 50a may cause the sound output device 56 to output an alarm. This is to call the attention of the object present in the opening/closing range of the hopper 2.

Step ST12 that is a process for determining whether or not an object is present in the opening/closing range of the hopper 2 may be omitted, or may be integrated with Step ST11 that is a process for determining whether or not the hopper closing condition is satisfied. In this case, the hopper control unit 50a can close the hopper 2 in a case where the hopper control unit 50a determines that the hopper closing condition is satisfied. Further, the hopper control unit 50a may determine whether or not an object is present in the hopper 2. The object is, for example, a person working in the hopper 2 or a predetermined amount or more of pavement material PV in the hopper 2. In this case, for example, the hopper control unit 50a may determine whether or not the object is present in the hopper 2 based on the image acquired by the front camera 51F as the space recognition device 51. Then, in a case where the hopper control unit 50a determines that the object is present in the hopper 2, the hopper control unit 50a may end the current hopper closing processing without operating the hopper control device HC, that is, without automatically closing the hopper 2. In other words, the hopper control unit 50a may be adapted to operate the hopper control device HC to close the hopper 2 only in a case where the hopper control unit 50a determines that the object is not present in the hopper 2. Furthermore, a process for determining whether or not the object is present in the hopper 2 may be integrated with Step ST11 that is a process for determining whether or not the hopper closing condition is satisfied.

In addition, the hopper control unit 50a may be adapted to close the hopper 2 in stages. The reason for this is that it may be difficult to bring the hopper 2 into the fully closed state in a case where the amount of pavement material PV in the hopper 2 is large. That is, the reason for this is that the pressure of the bottom-side oil chamber is increased and hydraulic oil is thus discharged through a relief valve even though hydraulic oil is caused to flow into the bottom-side oil chamber of the hopper cylinder 7 in order to cause the hopper cylinder 7 to extend. In this case, for example, the hopper control unit 50a may be adapted to increase the extension length of the hopper cylinder 7 in stages as time passes from a point in time when the pavement material PV is completely supplied to the asphalt finisher 100 from the dump truck 200. Further, the point in time when the pavement material PV is completely supplied to the asphalt finisher 100 from the dump truck 200 may be, for example, a point in time when the hopper control unit 50a determines that the hopper closing condition is satisfied or may be a point in time separate from the point in time when the hopper control unit 50a determines that the hopper closing condition is satisfied (for example, a point in time when the controller 50 detects that the loading platform 201 of the dump truck 200 is empty based on the output of the space recognition device 51 or the like). Alternatively, the hopper control unit 50a may be adapted to increase the extension length of the hopper cylinder 7 in stages in accordance with an increase in the traveling distance of the asphalt finisher 100, an increase in the number of rotations of the conveyor CV, or the like from a point in time when the hopper control unit 50a determines that the hopper closing condition is satisfied. Furthermore, a time interval between the stages and the extension length of the hopper cylinder 7 in each stage may be determined based on the pavement thickness or the pavement width.

With such hopper closing processing, the controller 50 can automatically start a function of closing the hopper 2 in a case where the dump truck 200 is separated from the asphalt finisher 100 even though the operator of the asphalt finisher 100 does not manually perform an operation for closing the hopper 2. For this reason, the controller 50 can automatically bring the hopper 2 into the fully closed state in a case where the dump truck 200 and the asphalt finisher 100 are away from each other even though the operator of the asphalt finisher 100 does not manually perform an operation for closing the hopper 2. Accordingly, the controller 50 can suppress that the pavement material PV in the hopper 2 is unnecessarily cooled.

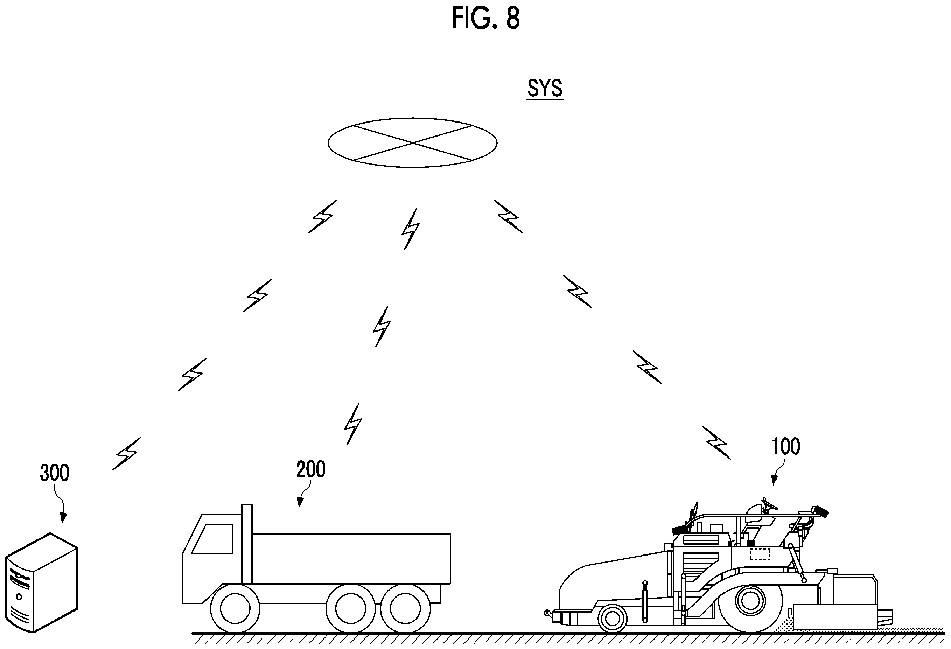

Next, another configuration example of the hopper control system SYS will be described with reference to Fig. 8. Fig. 8 is a schematic diagram showing another configuration example of the hopper control system SYS. The hopper control system SYS is a system that controls hoppers 2 of one or a plurality of asphalt finishers 100. In the present embodiment, the hopper control system SYS mainly includes an asphalt finisher 100, a dump truck 200, and a management device 300. The hopper control system SYS may include one or a plurality of asphalt finishers 100, one or a plurality of dump trucks 200, and one or a plurality of management devices 300. Further, communication with the dump truck 200 may be omitted. In the example shown in Fig. 8, the hopper control system SYS includes one asphalt finisher 100, one dump truck 200, and one management device 300.

The management device 300 is typically a fixed terminal device, and is, for example, a server computer that is installed in a management center or the like located at a place away from a construction site. The management device 300 may be a portable computer (for example, a laptop, a tablet PC, or a mobile terminal device such as a smartphone).

The management device 300 may include a monitor and an operation unit for remote operation. In this case, an operator may operate the asphalt finisher 100 while using the operation unit for remote operation. The operation unit for remote operation is connected to the controller 50 mounted on the asphalt finisher 100 through, for example, a wireless communication network, such as a Near-Field-Communication Network, a cell-phone communication network, or a satellite communication network.

In the hopper control system SYS shown in Fig. 8, the hopper control unit 50a may be realized by not the controller 50 of the asphalt finisher 100 but a control device of the management device 300.

In this case, the controller 50 of the asphalt finisher 100 may transmit at least one of the output of the space recognition device 51 or the output of the information acquisition device 53 to the management device 300.

Further, the space recognition device 51 may include a space recognition device not attached to the asphalt finisher 100, such as a space recognition device installed on the road, or may be a space recognition device not attached to the asphalt finisher 100. In this case, the space recognition device that is not attached to the asphalt finisher 100 may be connected to the controller 50 via wireless communication or wired communication, or may be connected to the management device 300.

As described above, the hopper control system SYS can control the opening and closing of the hopper 2 based on a positional relationship between the asphalt finisher 100 and the dump truck 200, regardless of whether the hopper control unit 50a is mounted on the management device 300 or is mounted on the controller 50. For this reason, the hopper control system SYS has an effect of being capable of reducing a burden on the operator of the asphalt finisher 100 related to the operation of the hopper 2.

As described above, as shown in Fig. 2, the asphalt finisher 100, which is an example of a road paving machine according to the embodiment of the present disclosure, includes the tractor 1, the hopper 2 that is installed in front of the tractor 1 and receives a pavement material PV from a vehicle (dump truck 200) transporting the pavement material PV, the conveyor CV that feeds the pavement material PV present in the hopper 2 to a rear of the tractor 1, the screw SC that spreads the pavement material PV fed by the conveyor CV in the rear of the tractor 1, the screed 3 that levels the pavement material PV spread by the screw SC in the rear of the screw SC, the object detection device (space recognition device 51) that detects an object around the asphalt finisher 100, and the control device (controller 50) that controls the opening and closing of the hopper 2 based on a positional relationship between the dump truck 200 detected by the object detection device and the asphalt finisher 100.

This configuration has an effect of being capable of reducing a burden on the operator related to the operation of the hopper 2. For example, since the hopper 2 is automatically opened in a case where the dump truck 200 enters a predetermined range in front of the asphalt finisher 100, an operation for opening the hopper 2 to be performed by an operator can be omitted in this configuration. Accordingly, this configuration has an effect of being capable of reducing a burden on the operator related to an operation for opening the hopper 2. For this reason, this configuration can suppress the occurrence of a problem caused by contact between the loading platform 201 and the hopper 2 in a case where the driver of the dump truck 200 overlooks the fact that the hopper 2 is closed, for example, in a situation where it is difficult to obtain a clear field of view such as during night construction. Alternatively, since the hopper 2 is automatically closed in a case where the dump truck 200 exits from a predetermined range in front of the asphalt finisher 100, an operation for closing the hopper 2 to be performed by an operator can be omitted in this configuration. Accordingly, this configuration has an effect of being capable of reducing a burden on the operator related to an operation for closing the hopper 2. Further, this configuration has an effect of being capable of suppressing that the pavement material PV in the hopper 2 is unnecessarily cooled since the hopper 2 is left in the fully open state. Furthermore, since an operation for opening/closing the hopper 2 is automated in this configuration, it is possible to reduce a burden on the operator related to work for opening/closing the hopper 2 and to allow the operator to be engaged in other work. As a result, this configuration has an effect of being capable of improving the accuracy of construction work as a whole. In addition, this configuration has an effect of being capable of more reliably realizing the automation of an operation for opening/closing the hopper 2 at an appropriate time as compared to a case where an operation for opening/closing the hopper 2 is automated through the identification of the amount of the pavement material PV in the hopper 2. The reason for this is that it is difficult to identify the amount of black pavement material PV based on an image in a case of night work or in a case where the hopper 2 is dirty. On the other hand, the reason for this is that identifying the positional relationship between the dump truck 200 and the asphalt finisher 100 based on the image is relatively easily realized through the detection of tail lamps of the dump truck 200 being turned on during the night work.

Further, the controller 50 may be adapted to open the hopper 2 in a case where the distance DS1 between the dump truck 200 positioned in front of the asphalt finisher 100 and the asphalt finisher 100 is equal to or shorter than a predetermined distance as shown in Figs. 1 and 2. Typically, the controller 50 is adapted to bring the hopper 2 into the fully open state. Furthermore, the predetermined distance may have a preset fixed value, or may be dynamically set based on at least one of the reverse speed of the dump truck 200, the forward speed of the asphalt finisher 100, the maximum opening speed of the hopper 2 (the maximum contraction speed of the hopper cylinder 7), or the like.

This configuration has an effect of being capable of reliably bringing the hopper 2 into the fully open state at an appropriate time.

Further, the controller 50 may be adapted to close the hopper 2 in a case where the dump truck 200 is not present in the third range ZN3, which is a predetermined range in front of the asphalt finisher 100, as shown in Figs. 6 and 7.

This configuration has an effect of being capable of closing the hopper 2 for a period as long as possible. Furthermore, this configuration has an effect of being capable of suppressing that the pavement material PV in the hopper 2 is unnecessarily cooled since the hopper 2 can be in a closed state for the entire period except for a period in which the pavement material PV is being supplied into the hopper 2 from the dump truck 200. In addition, this configuration has an effect of being capable of reducing a burden on the operator related to an operation for closing the hopper 2 since the hopper 2 can be automatically closed even after, for example, an operator manually opens the hopper 2 to visually check the pavement material PV in the hopper 2.

Further, the controller 50 may be adapted to start a control to automatically close the hopper 2 in a case where the pavement material PV is completely supplied to the asphalt finisher 100 from the dump truck 200.

This configuration has an effect of being capable of starting a control to automatically close the hopper 2 at an appropriate time. In this case, the controller 50 may determine that the pavement material PV is completely supplied to the asphalt finisher 100 from the dump truck 200 in a case where the distance DS2 between the asphalt finisher 100 and the dump truck 200 exceeds a predetermined distance, and may start a control to automatically close the hopper 2.

Further, the controller 50 may be adapted to close the hopper 2 in stages. For example, the controller 50 may be adapted to increase the extension length of the hopper cylinder 7 in stages in accordance with an increase in the traveling distance of the asphalt finisher 100, an increase in the number of rotations of the conveyor CV, or the like from a point in time when the controller 50 determines that the hopper closing condition is satisfied. Furthermore, the extension length of the hopper cylinder 7 in each stage may be determined based on the pavement thickness, the pavement width, or the like.

This configuration has an effect of being capable of efficiently making the hopper 2 close to the fully closed state. In a case where the amount of the pavement material PV in the hopper 2 is large, the pressure of the bottom-side oil chamber is increased and the hydraulic oil is thus discharged through the relief valve even though hydraulic oil is caused to flow into the bottom-side oil chamber of the hopper cylinder 7 in order to cause the hopper cylinder 7 to extend to close the hopper 2. However, since the hopper 2 is closed in stages in this configuration, it is possible to bring the hopper 2 into the fully closed state while suppressing the discharge of hydraulic oil through the relief valve. Accordingly, since the hopper 2 is brought into the fully closed state as early as possible in this configuration, this configuration has an effect of being capable of suppressing that the pavement material PV in the hopper 2 is unnecessarily cooled.

Further, the hopper control system SYS according to the embodiment of the present disclosure that supports construction performed by the asphalt finisher 100 includes an object detection device that detects an object around the asphalt finisher 100, and a control device that controls the opening and closing of the hopper 2 based on a positional relationship between a vehicle (dump truck 200) detected by the object detection device and the asphalt finisher 100. The object detection device may be a device such as the space recognition device 51 mounted on the asphalt finisher 100, or may be a device not mounted on the asphalt finisher 100, such as a device installed on the road. Furthermore, the control device may be the controller 50 mounted on the asphalt finisher 100, or may be a control device of the management device 300 installed in a management center.

This configuration has an effect of being capable of reducing a burden on an operator related to the operation of the hopper 2 as in the asphalt finisher 100 according to the embodiment of the present disclosure.

The preferred embodiments of the present disclosure have been described above. However, the present disclosure is not limited to the embodiments described above and is not limited to embodiments to be described later. Various modifications, substitutions, or the like can be applied to embodiments that have been described above or will be described later without departing from the scope of the present disclosure. In addition, respective features described with reference to the embodiments that have been described above or will be described later may be combined as appropriate as long as not being technically inconsistent.

### Brief Description of the Reference Symbols

1: Tractor
2: Hopper
2P: Push roller
2PL: Left push roller
2PR: Right push roller
2W: Hopper wing
2WL: Left hopper wing
2WR: Right hopper wing
3: Screed
3A: Leveling arm
5: Rear wheel
6: Front wheel
7: Hopper cylinder
7L: Left hopper cylinder
7R: Right hopper cylinder
30: Front screed
31: Rear screed
31L: Left rear screed
31R: Right rear screed
32: Footboard
32C: Central footboard
32L: Left footboard
32R: Right footboard
41: Side plate
41L: Left side plate
41R: Right side plate
42: Moldboard
42L: Left moldboard
42R: Right moldboard
43: Retaining plate
43L: Left retaining plate
43R: Right retaining plate
50: Controller
50a: Hopper control unit
51: Space recognition device
51B: Rear camera
51F: Front camera
51L: Left camera
51R: Right camera
53: Information acquisition device
55: Display device
56: Sound output device
60: Power supply device
61: Diesel engine
62: Generator
65: Main pump
100: Asphalt finisher
200: Dump truck
201: Loading platform
202: Front wheel
202L: Left front wheel
202R: Right front wheel
203: Rear-front wheel
203EL: Left outer rear-front wheel
203ER: Right outer rear-front wheel
203IL: Left inner rear-front wheel
203IR: Right inner rear-front wheel
204: Rear-rear wheel
204EL: Left outer rear-rear wheel
204ER: Right outer rear-rear wheel
204IL: Left inner rear-rear wheel
204IR: Right inner rear-rear wheel
205: Hoist cylinder
300: Management device
CV: Conveyor
FR: Frame
HC: Hopper control device
HL: First oil passage
HV: Hopper spool valve
NP: Newly constructed pavement body
PV: Pavement material
RB: Roadbed
SC: Screw
SCL: Left extension screw
SCR: Right extension screw
SYS: Hopper control system
ZN1: First range
ZN2: Second range
ZN2L: Second left range
ZN2R: Second right range
ZN3: Third range

## Claims

1. A road paving machine (100) comprising:
a tractor (1);
a hopper (2) that is installed in front of the tractor (1) and receives a pavement material (PV) from a vehicle (200) transporting the pavement material (PV);
a conveyor (CV) that feeds the pavement material (PV) present in the hopper (2) to a rear of the tractor (1);
a screw (SC) that spreads the pavement material (PV) fed by the conveyor (CV) in the rear of the tractor (1);
a screed (3) that levels the pavement material (PV) spread by the screw (SC) in a rear of the screw (SC);
an object detection device (51) that detects an object around the road paving machine (100); and
a control device (50) that controls opening and closing of the hopper (2) based on a positional relationship between the vehicle (200) detected by the object detection device (51) and the road paving machine (100),
**characterized in that**
the control device (50) starts a control to automatically close the hopper (2) in different stages between an open stage and a fully closed stage in a case where the pavement material (PV) is completely supplied to the road paving machine (100) from the vehicle (200).

2. The road paving machine (100) according to claim 1,
wherein the control device (50) opens the hopper (2) in a case where a distance (DS1) between the vehicle (200) positioned in front of the road paving machine (100) and the road paving machine (100) is equal to or shorter than a predetermined distance.

3. The road paving machine (100) according to claim 1,
wherein the control device (50) closes the hopper (2) in a case where the vehicle (200) is not present in a predetermined range in front of the road paving machine (100).

4. A hopper control system (SYS) for a road paving machine (100) that supports construction performed by a road paving machine (100) including a tractor (1), a hopper (2) that is installed in front of the tractor (1) and receives a pavement material (PV) from a vehicle (200) transporting the pavement material (PV), a conveyor (CV) that feeds the pavement material (PV) present in the hopper (2) to a rear of the tractor (1), a screw (SC) that spreads the pavement material (PV) fed by the conveyor (CV) in the rear of the tractor (1), and a screed (3) that levels the pavement material (PV) spread by the screw (SC) in a rear of the screw (SC), the hopper control system (SYS) comprising:
an object detection device (51) that detects an object around the road paving machine (100); and
a control device (50) that controls opening and closing of the hopper (2) based on a positional relationship between the vehicle (200) detected by the object detection device (51) and the road paving machine (100),
**characterized in that**
the control device (50) starts a control to automatically close the hopper (2) in different stages between an open stage and a fully closed stage in a case where the pavement material (PV) is completely supplied to the road paving machine (100) from the vehicle (200).

## Patentansprüche

1. Straßenfertiger (100), umfassend:
einen Traktor (1);
einen Sammelbehälter (2), der vor dem Traktor (1) installiert ist und ein Straßenbelagsmaterial (PV) von einem Fahrzeug (200), dass das Straßenbelagsmaterial (PV) transportiert, aufnimmt;
einen Förderer (CV), der das Straßenbelagsmaterial (PV), dass sich im Sammelbehälter (2) befindet, zu einer Rückseite des Traktors (1) fördert;
eine Schnecke (SC), die das Straßenbelagsmaterial (PV), das von dem Förderer (CV) gefördert wird, auf der Rückseite des Traktors (1) verteilt;
eine Bohle (3), die das Straßenbelagsmaterial (PV), das von der Schnecke (SC) verteilt wird, auf einer Rückseite der Schnecke (SC) ebnet;
eine Objektdetektionsvorrichtung (51), die ein Objekt um den Straßenfertiger (100) herum detektiert; und
eine Steuervorrichtung (50), die Öffnen und Schließen des Sammelbehälters (2) auf Grundlage einer Positionsbeziehung zwischen dem Fahrzeug (200), das von der Objektdetektionsvorrichtung (51) detektiert wird, und dem Straßenfertiger (100) steuert,
**dadurch gekennzeichnet, dass**
die Steuervorrichtung (50) eine Steuerung startet, um den Sammelbehälter (2) automatisch in verschiedenen Stufen zwischen einer offenen Stufe und einer vollständig geschlossenen Stufe zu schließen, in einem Fall, bei dem das Straßenbelagsmaterial (PV) vollständig zu dem Straßenfertiger (100) vom Fahrzeug (200) zugeführt wird.

2. Straßenfertiger (100) nach Anspruch 1,
wobei die Steuervorrichtung (50) den Sammelbehälter (2) öffnet, in einem Fall, bei dem ein Abstand (DS1) zwischen dem Fahrzeug (200), das vor dem Straßenfertiger (100) positioniert ist, und dem Straßenfertiger (100) gleich oder kürzer als ein vorbestimmter Abstand ist.

3. Straßenfertiger (100) nach Anspruch 1,
wobei die Steuervorrichtung (50) den Sammelbehälter (2) schließt, in einem Fall, bei dem sich das Fahrzeug (200) nicht in einem vorbestimmten Bereich vor dem Straßenfertiger (100) befindet.

4. Sammelbehältersteuerungssystem (SYS) für einen Straßenfertiger (100), das Bauarbeiten, die von einem Straßenfertiger (100) durchgeführt werden, unterstützt, umfassend einen Traktor (1), einen Sammelbehälter (2), der vor dem Traktor (1) installiert ist und ein Straßenbelagsmaterial (PV), von einem Fahrzeug (200), dass das Straßenbelagsmaterial (PV) transportiert, aufnimmt, einen Förderer (CV), der das Straßenbelagsmaterial (PV), das sich im Sammelbehälter (2) befindet, zu einer Rückseite des Traktors (1) zuführt, eine Schnecke (SC), die das Straßenbelagsmaterial (PV), das von dem Förderer (CV) zugeführt wird, auf der Rückseite des Traktors (1) verteilt, und eine Bohle (3), die das Straßenbelags (PV), das von der Schnecke (SC) verteilt wird, an einer Rückseite der Schnecke (SC) ebnet, wobei das Sammelbehältersteuerungssystem (SYS) umfasst:
eine Objektdetektionsvorrichtung (51), die ein Objekt um den Straßenfertiger (100) herum detektiert; und
eine Steuervorrichtung (50), die Öffnen und Schließen des Sammelbehälters (2) auf Grundlage einer Positionsbeziehung zwischen dem Fahrzeug (200), das von der Objektdetektionsvorrichtung (51) detektiert wurde, und dem Straßenfertiger (100) steuert,
**dadurch gekennzeichnet, dass**
die Steuervorrichtung (50) eine Steuerung startet, um den Sammelbehälter (2) automatisch in verschiedenen Stufen zwischen einer offenen Stufe und einer vollständig geschlossenen Stufe zu schließen, in einem Fall, bei dem das Straßenbelagsmaterial (PV) vollständig von dem Fahrzeug (200) zu dem Straßenfertiger (100) zugeführt wurde.

## Revendications

1. Une machine de pavage routier (100) comprenant :
un tracteur (1) ;
une trémie (2) qui est installée à l'avant du tracteur (1) et recevant un matériau de pavage (PV) provenant d'un véhicule (200) transportant le matériau de pavage (PV) ;
un transporteur (CV) qui alimente le matériau de pavage (PV) présent dans la trémie (2) vers une partie arrière du tracteur (1) ;
une vis (SC) qui étale le matériau de pavage (PV) alimenté par le transporteur (CV) à l'arrière du tracteur (1) ;
une table de nivellement (3) qui nivelle le matériau de pavage (PV) étalé par la vis (SC) à l'arrière de la vis (SC) ;
un dispositif de détection d'objet (51) qui détecte un objet autour de la machine de pavage routier (100) ; et
un dispositif de commande (50) qui commande l'ouverture et la fermeture de la trémie (2) sur la base d'une relation de position entre le véhicule (200) détecté par le dispositif de détection d'objet (51) et la machine de pavage routier (100),
**caractérisée en ce que** :
le dispositif de commande (50) démarre une commande visant à fermer automatiquement la trémie (2) selon différentes étapes entre une étape ouverte et une étape complètement fermée, dans un cas dans lequel le matériau de pavage (PV) est entièrement fourni à la machine de pavage routier (100) depuis le véhicule (200).

2. La machine de pavage routier (100) selon la revendication 1,
dans laquelle le dispositif de commande (50) ouvre la trémie (2) dans un cas dans lequel une distance (DS1) entre le véhicule (200) positionné à l'avant de la machine de pavage routier (100) et la machine de pavage routier (100) est inférieure ou égale à une distance prédéterminée.

3. La machine de pavage routier (100) selon la revendication 1,
dans laquelle le dispositif de commande (50) ferme la trémie (2) dans un cas dans lequel le véhicule (200) n'est pas présent dans une plage prédéterminée à l'avant de la machine de pavage routier (100).

4. Un système de commande de trémie (SYS) pour une machine de pavage routier (100) qui assiste la construction effectuée par une machine de pavage routier (100) comprenant un tracteur (1), une trémie (2) qui est installée à l'avant du tracteur (1) et reçoit un matériau de pavage (PV) provenant d'un véhicule (200) transportant le matériau de pavage (PV), un transporteur (CV) qui alimente le matériau de pavage (PV) présent dans la trémie (2) vers une partie arrière du tracteur (1), une vis (SC) qui étale le matériau de pavage (PV) alimenté par le transporteur (CV) à l'arrière du tracteur (1), et une table de nivellement (3) qui nivelle le matériau de pavage (PV) étalé par la vis (SC) à l'arrière de la vis (SC), le système de commande de trémie (SYS) comprenant :
un dispositif de détection d'objet (51) qui détecte un objet autour de la machine de pavage routier (100) ; et
un dispositif de commande (50) qui commande l'ouverture et la fermeture de la trémie (2) sur la base d'une relation de position entre le véhicule (200) détecté par le dispositif de détection d'objet (51) et la machine de pavage routier (100),
**caractérisé en ce que** :
le dispositif de commande (50) démarre une commande visant à fermer automatiquement la trémie (2) selon différentes étapes entre une étape ouverte et une étape complètement fermée, dans un cas dans lequel le matériau de pavage (PV) est entièrement fourni à la machine de pavage routier (100) depuis le véhicule (200).
